# EUROPEAN PATENT APPLICATION

(11) **EP 3 587 280 A1**
(43) Date of publication of application: **01.01.2020**
(21) Application number: 18382458.0
(22) Date of filing: 21.06.2018
(51) Int. Cl.: B64F 5/10, G06F 3/14, B64F 5/40

(54) **PROJECTOR FOR IDENTIFYING STRUCTURAL ITEMS BEHIND A FUSELAGE OF AN AIRCRAFT AND A RELATED METHOD**

(71) Applicant: Airbus Operations, S.L.U., 28906 Getafe (Madrid) (ES)
(72) Inventor: ROSIQUE GOMEZ, Alejandro, 28906 GETAFE (Madrid) (ES); VALERA RODRIGUEZ, Pedro, 28906 GETAFE (Madrid) (ES)
(74) Representative: Herrero & Asociados, S.L.

(57) **Abstract**

The object of the present invention is a projector to project a pattern on a surface of an aircraft, the projector comprises software means to read a pattern, projecting means to project the read pattern onto the surface of the aircraft. The pattern comprises structural references that relate to the structural items behind the fuselage of the aircraft and frame references that relate to predetermined visible points of the fuselage of the aircraft. The frame references are aligned with the predetermined visible points of the fuselage to match the pattern with the aircraft and the structural items are identified based on the structural references.

## Description

### Background of the invention

Nowadays, in order to map out structural items behind the fuselage of the aircraft, maps and sketches are used resulting in a tedious, time consuming and inaccurate procedure.

Therefore, a device and procedure that permits identifying structural elements and features behind the fuselage of an aircraft that solves the aforementioned drawbacks is desired.

### Description of the invention

The present disclosure proposes a projector for identifying structural items behind a fuselage of an aircraft by projecting patterns on a surface of the aircraft. The present disclosure also proposes a procedure for identifying structural items behind a fuselage of an aircraft based on the projection of those patterns. Hence, the use of maps and sketches is no longer needed because the proposed projector permits to easily identify structural items behind the fuselage of the aircraft with in a rapid manner. In fact, the maps and sketches are substituted by the patterns projected on the fuselage outer surface of the aircraft. In this regard, the pattern comprises structural references. The structural references identify structural items behind the fuselage of the aircraft. Structural references can be e.g. numerical references that show the location of structural elements behind the fuselage of the aircraft. Furthermore, the pattern comprises frame references that relate to predetermined visible points of the fuselage and that permit a correct alignment of the pattern with the aircraft. In this regard, frame references are intended to be superposed on the predetermined visible points of the fuselage of the aircraft. In other words, the frame references are designed to match with the predetermined visible points of the fuselage of the aircraft.

Hence, the object of the present invention is to identify items behind the fuselage of the aircraft, and for that; it is provided a device that projects a pattern that represents the structure of an aircraft on the fuselage of the aircraft. To provide accuracy and alignment between the pattern and the fuselage, frame references included in the pattern can be aligned with predetermined visible points of the fuselage to match the pattern with the aircraft. Thus, items are quickly identified ensuring the best solution during an assessment phase of the aircraft structure. Furthermore the proposed projector can be used without non-destructive testing NDT qualification to obtain the thickness or stepping of a composite skin of the fuselage of the aircraft because the proposed projector is not an NDT device.

Furthermore, the proposed projector can be used during the repair assessment, when only the outer surface of the aircraft is visible. Moreover, for any structural modification of the aircraft, the proposed projector can be used having an initial reference of the structure behind the fuselage. In some examples, systems of the aircraft more than structural elements can be projected in order to get an idea of the room and placement before unscrewing the panels.

Hence, in one aspect, the present invention refers to a projector for identifying structural items behind a fuselage of an aircraft by projecting a pattern on a surface of an aircraft. The projector comprises software means to read the pattern and projecting means to project the read pattern onto the surface of the aircraft. The pattern comprises structural references e.g. numerical elements that identify structural items behind the fuselage of the aircraft and frame references to be aligned with predetermined visible points of the fuselage of the aircraft in order to ensure accuracy. In some examples, the projector comprises supporting means that improves alignment between the projected pattern and the fuselage of the aircraft based on the frame references.

In some examples, the projector comprises optical and/or digital means to zoom in/out the read pattern to scale the projected pattern to a particular size. Scaling the pattern to a particular size permits to adapt the size of the pattern to a desired size that matches the real dimensions of fuselage of the aircraft. In this respect, the pattern can further comprise coordinate axes to measure the scale of the projected pattern to the particular size. For example, the coordinate axes may comprise two axes in millimetres.

In another aspect of the present invention, it is proposed a method for identifying structural items behind a fuselage of an aircraft based on projecting patterns on a surface of the aircraft. The method comprises a step for reading a pattern that comprises structural references that represent structural items of the aircraft and frame references used to be aligned with predetermined visible points of the fuselage. Furthermore, the method comprises steps for projecting the pattern onto the surface of the aircraft, for aligning the frame references with predetermined visible points of the fuselage of the aircraft and for identifying the structural items based on the structural references after the mentioned alignment.

Hence, the frame references are aligned with predetermined visible points of the fuselage of the aircraft to permit a correct projection of the pattern onto the fuselage of the aircraft to identify the structural items behind the fuselage of the aircraft.

In some examples, the method permits projecting at least a second pattern with at least a second projector onto the surface of the aircraft and overlapping the second pattern with the first pattern to obtain an overlapped pattern, wherein the overlapped pattern permits identifying new structural items. In some other examples, more than two patterns can be overlapped in order to obtain an overlapped pattern out of many individual patterns. Overlapped patterns can be projected onto areas of the fuselage that include e.g. curves or corners.

### Brief description of the drawings

For a better understanding the above explanation and for the sole purpose of providing an example, some non-limiting drawings are included that schematically depict a practical embodiment.
Figure 1 shows an example of a pattern according to the present disclosure.
Figure 2 shows a section of the pattern according to the present disclosure.
Figure 3 shows a projection of the section of the pattern according to the present disclosure.

### Description of a preferred embodiment

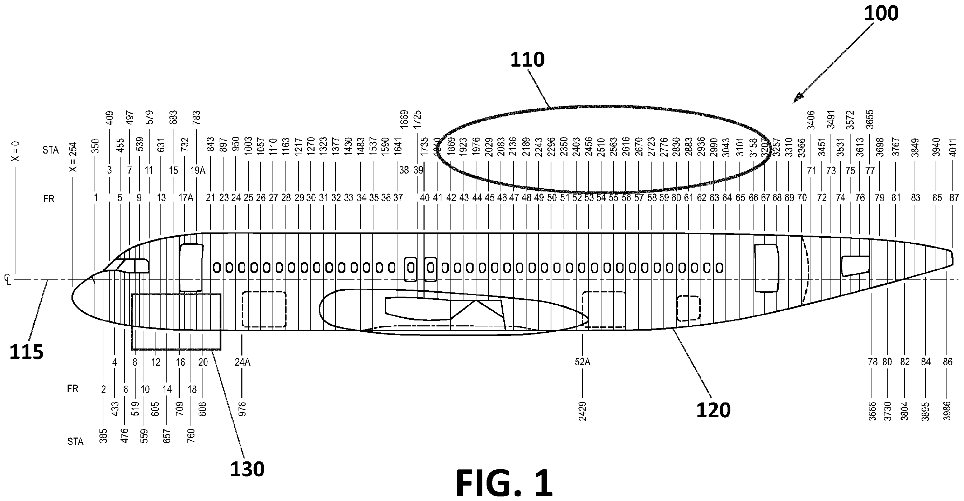

Figure 1 shows an example of a pattern 100 according to the present disclosure. The pattern 100 can be obtained from a computing system associated with a projector (not shown in the figure) for projecting patterns according to the present disclosure. Examples of a computing system can be e.g. a laptop, a smartphone a tablet, etc. Furthermore, the projector comprises projecting means to project the read pattern onto the surface of the aircraft. In the preferred embodiment, the projector is a high contrast projector. The pattern can be generated and transmitted by said computing system to the projector that comprises software means to read the pattern. In the preferred embodiment, the software means comprises a media player to read the pattern 100. The projector comprises wireless and non-wireless means for receiving and loading the pattern transmitted from the computing system. The pattern 100 shows the fuselage 120 of an aircraft, numerical structural references 110 that relate to a group of structural items located behind the fuselage 120 of the aircraft and several frame references points as e.g. reference axis 115 to be aligned with predetermined visible points of the fuselage of the aircraft to accurately match the pattern with the aircraft. In some examples, the pattern 100 is based on a clad thickness and stepping of skin composites of the fuselage of the aircraft.

The group of structural items identified by the numerical structural references 110 can refer e.g. to frames, system supports, longerons, etc. In some examples, other structural elements behind the fuselage of the aircraft or even full systems of the aircraft as e.g. electric system, ventilation system, pressurization system, etc. can be spotted by the proposed projector. Furthermore, figure 1 shows a pattern section 130 chosen to be projected with the projector. Hence once the pattern section 130 is correctly projected onto fuselage of the aircraft, it is easy and quick to identify and locate any structure item or system behind the fuselage skin.

The equipment can be based on commercial off-the-shell COTS product provided by a third party in order reduce costs. The projector can include purchased software as e.g. a media player that permits the projection of any section of the pattern 100 on the surface of the aircraft. In some examples, the projector can comprise a tripod that ensures the right height for projection. The tripod also gives stability to the projector for a correct functioning of the projector and gives a proper positioning of the projector achieved by aligning the frame references with the predetermined visible points of the fuselage to match the pattern with the aircraft.

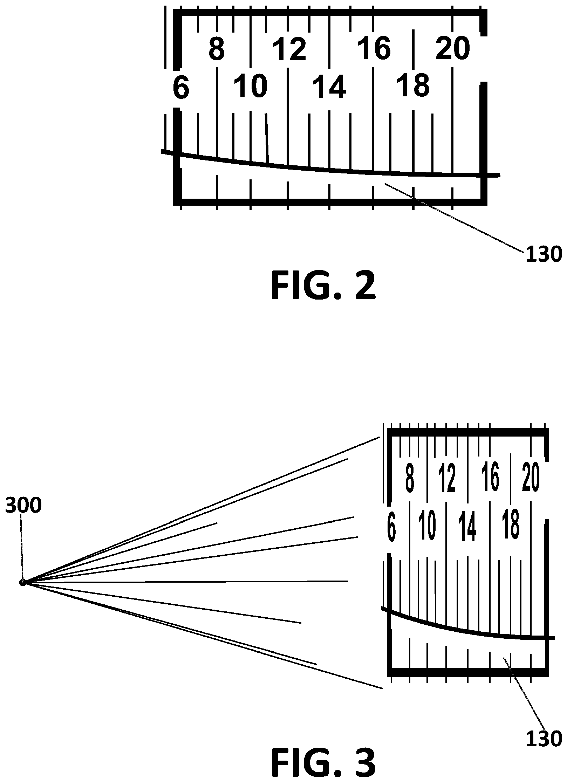

Figure 2 shows the pattern section 130 selected to be projected by the projector (not shown in this figure). The pattern section 130 includes numerical references to structural items located behind the fuselage of the aircraft, e.g. frames, systems supports, longerons, etc.

Figure 3 shows a projection 300 of the pattern section 130. The projection 300 is performed by the proposed projector on the outer surface of the fuselage of the aircraft in order to map out structural items behind the fuselage and which are identified by the numerical structural references included in the pattern section 130.

Even though reference has been made to a specific embodiment of the invention, it is obvious for a person skilled in the art that the lightning protector described herein is susceptible to numerous variations and modifications, and that all the details mentioned can be substituted for other technically equivalent ones without departing from the scope of protection defined by the attached claims.

## Claims

1. A projector for identifying structural items behind a fuselage of an aircraft, the projector comprising:
software means to read a pattern;
projecting means to project the read pattern onto the surface of the aircraft;
wherein the pattern comprises:
structural references that relate to the structural items behind the fuselage of the aircraft; and
frame references that relate to predetermined visible points of
the fuselage of the aircraft; and
wherein the frame references are aligned with the predetermined visible points of the fuselage to match the pattern with the aircraft, and
wherein the structural items are identified based on the structural references.

2. The projector of claim 1, further comprising optical and/or digital means to zoom in/out the read pattern to scale the projected pattern to a desired size.

3. The projector of claim 2, wherein the pattern further comprises coordinate axes to measure the scaling of the projected pattern to the desired size.

4. The projector of any of the preceding claims, further comprising supporting means to provide alignment between the frame references and the predetermined visible points of the fuselage of the aircraft.

5. The projector of any of the preceding claims, further comprising wireless and non-wireless interface means to receive the pattern.

6. The projector of any of the preceding claims, wherein the projector is a high contrast projector.

7. The project of any of the preceding claims, wherein the structural items of the aircraft comprise frames, stringers, joint means, longerons, fuselage mechanical supports and spars located behind the fuselage of the aircraft.

8. The project of any of the preceding claims, wherein the pattern is based on clad thickness and stepping procedures of a composite skin of the fuselage of the aircraft.

9. The projector of claims 2 to 8, wherein the supporting means comprise a tripod that provides height to the projector, stability for a correct functioning of the projector and a proper positioning of the projector achieved by aligning the frame references with the predetermined visible points of the fuselage to match the pattern with the aircraft.

10. A method performed with a projector for identifying structural items behind a fuselage of an aircraft, the method comprising:
reading a first pattern, the first pattern comprising structural references that relate to structural items behind the fuselage of the aircraft and frames references that relate to visible points of the fuselage of the aircraft;
projecting the first pattern onto the surface of the aircraft;
aligning the frame references with visible points of the fuselage of the aircraft to match the first pattern with the aircraft; and
identifying the structural items based on the structural references.

11. The method of claim 10, further comprising:
projecting at least a second pattern with at least a second projector onto the surface of the aircraft; and
overlapping the second pattern with the first pattern to obtain an overlapped pattern,
wherein the overlapped pattern permits identifying new structural items.
